# EUROPEAN PATENT APPLICATION

(11) **EP 4 145 648 A1**
(43) Date of publication of application: **08.03.2023**
(21) Application number: 22193584.4
(22) Date of filing: 02.09.2022
(51) Int. Cl.: H01R 43/16, H01R 4/18, H01R 13/187

(54) **SEMI-FINISHED PRODUCT PROVIDED WITH A WINDOW FOR LASER WELDING FOR MANUFACTURING AN ELECTRICAL CONTACT ELEMENT AND METHOD FOR MANUFACTURING AN ELECTRICAL CONTACT ELEMENT**

(30) Priority: 03.09.2021 DE 102021122892
(71) Applicant: TE Connectivity Germany GmbH, 64625 Bensheim (DE)
(72) Inventor: DIETRICH, Willi, 64625 Bensheim (DE); SACHS, Soenke, 64625 Bensheim (DE)
(74) Representative: Grünecker Patent- und Rechtsanwälte PartG mbB

(57) **Abstract**

The invention relates to a semi-finished product (15) for manufacturing an electrical contact element (1), to an electrical contact element (1), and to a method for manufacturing the same. A semi-finished product (15) is provided according to the invention in order to ensure a secure connection between several workpieces from which a contact element (1) is to be manufactured, wherein the semi-finished product (15) comprises a first metallic workpiece (17) and a second metallic workpiece (19), wherein the first workpiece (17) has a front side (25) and a rear side (27) disposed opposite the front side (25), and the rear side (27) is arranged closer to the second workpiece (19), wherein the semi-finished product (15) has at least one window (23) which extends at least through the first workpiece (17) and through which a surface (29) of the second workpiece (19) is accessible from the first workpiece (17), and wherein the window (23) has a base area (33) which, starting out at the front side (25) of the first workpiece (17), increases towards the second workpiece (19).

## Description

The invention relates to a semi-finished product for manufacturing an electrical contact element and a method for joining a first metallic workpiece with a second metallic workpiece by way of laser welding. The invention additionally relates to an electrical contact element.

Electrical contact elements are known. They can be used to establish an electrically conductive connection in connectors. An electrical contact element can comprise, for example, a contact pin or a receptacle for a contact pin. Electrical contact elements are often composed of several parts. This allows the individual parts to be manufactured according to the properties demanded, such as electrical conductivity, corrosion resistance, abrasion resistance, or elasticity. The two parts are referred to as workpieces during the manufacture of the electrical contact element. In general, the two workpieces are manufactured separately to a certain extent and mated or joined at a certain point in time in the manufacturing process. The arrangement of the workpieces that are mated or joined or to be joined is referred to as a semi-finished product, regardless of the degree of completion of the individual workpieces. The electrical contact element is then manufactured from the semi-finished product. Depending on the field of use of the electrical contact element, it can be necessary for the two parts of the contact element to be electrically conductively and/or mechanically connected to one another. In particular in mass production, this connection can be complex and therefore expensive.

It is therefore the object of the invention to simplify the manufacture of an electrical contact element which is assembled from several parts.

This object is satisfied by a semi-finished product that comprises a first metallic workpiece and a second metallic workpiece, wherein the first workpiece has a front side and a rear side disposed opposite the front side, and the rear side is arranged closer to the second workpiece, wherein the semi-finished product has at least one window which extends at least through the first workpiece and through which a surface of the second workpiece, in particular to be welded by way of a laser beam, is accessible from the first workpiece, and wherein the window has a base area which, starting out at the front side of the first workpiece, increases towards the second workpiece. The object is satisfied for the electrical contact element according to the invention in that the electrical contact element is manufactured from a semi-finished product according to the invention and/or using the method according to the invention. The above-mentioned object is satisfied for the method according to the invention in that at least the first workpiece has a front side and a rear side disposed opposite the front side, and the rear side is arranged closer to the second workpiece than the front side, wherein at least one laser beam is directed through a window extending at least through a first workpiece onto the second workpiece and is reflected from the second workpiece onto the rear side of the first workpiece.

The solution according to the invention allows for the two metal workpieces to be joined with one another to be joined quickly and easily by way of laser welding. A laser beam can be directed onto a surface of the second workpiece through the window which extends at least through the first workpiece. The laser beam is reflected at this surface and impinges the rear side of the first workpiece. For the semi-finished product, this is achieved in that the base area of the window towards the second workpiece is larger than on the front side of the first workpiece. The surface of the second workpiece that is accessible through the window can therefore be larger than the base area of the window. A laser beam radiated into the window and reflected at the surface of the second workpiece is not reflected out of the window again, but is reflected onto the rear side of the first workpiece. In this region, both workpieces are heated by the laser beam so that they can fuse together at one edge of the window and create a weld spot. The solution according to the invention is particularly useful when lateral irradiation into a gap located between the two workpieces is not possible due to the geometry of one or both workpieces. Due to the welded connection of the two workpieces to one another, the prior coating of one or both workpieces can be dispensed with. At least in the region where the two workpieces are in contact, a coating can be dispensed with, which would otherwise be necessary to ensure a permanently good electrical connection between the two workpieces and to prevent corrosion. As a result, manufacturing can be simplified and costs reduced.

The term "window" refers to the passage opening that extends at least through the first workpiece. The passage opening or the window, respectively, can also extend at least in sections into the material of the second workpiece. The term "base area" of the window can be used synonymously with the term "window area". The enlargement of the base area of the window can be sudden or continuous. The enlargement of the window towards the second workpiece can also be described in that an inner dimension of the window is greater at a position spaced from the front side of the first workpiece than at the front side of the first workpiece. The position spaced from the front side is disposed closer to the second workpiece than the front side of the first workpiece, or in the second workpiece. When carrying out the method according to the invention, the two workpieces to be joined with one another are preferably the two workpieces of a semi-finished product according to the invention. In the case of the semi-finished product according to the invention and/or during the implementation of the method according to the invention, the rear side of the first workpiece is preferably in abutment against the second workpiece, at least in the vicinity of the window. In the following text, the terms laser beam and laser light are used synonymously. The surface of the second workpiece that is accessible through the window can also be considered, at least in sections, as a reflection surface for the laser beam.

The solution according to the invention can be further improved with various configurations that are advantageous on their own and can be combined at random. These configurations and the advantages associated therewith shall be described hereafter.

According to a first advantageous configuration of the semifinished product, at least one light trap for capturing laser light extends between a boundary surrounding the window on the front side of the first workpiece and the surface of the second workpiece that is accessible through the window. This light trap, or also light trapping volume, is a volume disposed between two oppositely disposed surfaces of the workpieces in which a laser beam can be trapped and absorbed during laser welding. The light trap is preferably configured such that laser light can be reflected multiple times within the light trap between the two workpieces. The light trap can also accommodate the melt created by heating the two workpieces. The light trap is a cavity which is part of the passage opening forming the window, or part of the window, respectively. In other words, the window opens into the light trap disposed between the two workpieces.

The at least one light trap can form a niche between the two workpieces. The niche can have the shape in particular of a gap or a recess. The light trap can also be described as an undercut in the material of the first and/or the second workpiece extending from the window. A surface of the rear side of the first workpiece in the region of the light trap is preferably plane-parallel with the front side of the first workpiece. However, this is not mandatory.

One of the two workpieces is preferably a piece of sheet metal and the other workpiece is a pre-formed contact part for the later contact element. The contact part can be formed, for example, by a pin, a flat contact, or a spring. The piece of sheet metal can already be pre-punched and optionally also be pre-formed at least in sections. The invention makes it possible to join an already pre-formed part with a part that has at least not yet been completely made to assume a desired shape by forming. The part, which has not yet been pre-formed or has not yet been pre-formed completely, can be made to assume the desired shape by bending or other metal forming processes once the two workpieces have been joined with one another by laser welding.

As an alternative to the joining described above of a pre-formed part with a part that has not yet been pre-formed, both workpieces can also be made of sheet metal that has not yet been pre-formed completely or of other blanks or semi-finished products. A further alternative is that both parts are pre-formed, in particular by punching and bending, and are placed against and/or inside one another and then joined with one another by laser welding. In this case, both workpieces are pre-formed parts, in particular parts of a contact element.

In order to further improve the efficiency of the laser welding, at least the surface of the second workpiece that is accessible through the window can be provided with a surface structure.

The surface accessible through the window can be provided, for example, with a convex curvature. This can hide the tendency to reflect a laser beam into the region between the two workpieces, in particular into a light trap. The curvature preferably projects with its apex toward the window.

The surface of the second workpiece can be provided with a microstructure as an alternative or in addition to the convex curvature. A microstructure can be obtained, for example, by embossing, etching, electron beam bombardment, or engraving.

A surface of the first workpiece that defines the light trap is particularly preferably likewise provided with a microstructure. Microstructures can increase the absorption at the surfaces of the workpieces.

The window can form a channel for laser welding that extends to be substantially perpendicular to the surface of the second workpiece accessible through the window. Laser welding can be performed substantially perpendicular to the surfaces of the two workpieces. In other words, the laser beam can be directed substantially parallel to a surface normal on the surface of the second workpiece that is accessible through the window. The laser beam preferably forms an angle with this surface normal of less than 45°.

The at least one window can have an overall rectangular cross-section. As an alternative thereto, other cross sections, for example, polygonal, circular, ellipsoidal, triangular, slit-shaped, or other cross sections presently not listed, are also possible.

The window can have an inner dimension that is only insignificantly larger than the diameter of the laser beam for laser welding. For example, the window can have an inner dimension that is smaller than 1.5 times, preferably smaller than 1.3 times the diameter of the laser beam for laser welding.

The metallic workpieces can be made from different or from the same metallic materials. Metallic materials mean pure metals as well as alloys of various metals. For example, one of the workpieces can be made of steel and the other can be made of copper or an alloy containing copper.

The invention can also be advantageous for joining together workpieces made of metallic materials which, as is known, are difficult to electrically join by way of a purely mechanical contact. An example of this is aluminum which can lose its conductivity at the surface due to the formation of oxide layers. By welding the two metallic workpieces together, this problem can be prevented even if one or both of the workpieces is/are made of aluminum or an alloy containing aluminum.

In addition to the advantages mentioned above, the at least one window can also be used for quality assurance. Prior to welding, the window can be used to examine the exposed surface of the second workpiece and/or to examine the weld joint produced after welding.

The electrical contact element can comprise at least one weld spot by which the two workpieces of the contact element are joined with one another in a positive substance-fit manner at an edge of the window. In other words, the at least one weld spot can form a material joint between the two workpieces of the contact element at an edge of the window. The at least one weld spot can be located in particular where a light trap was previously located. Melting the materials of both workpieces can fill the light trap so that it no longer exists as a cavity. The positive substance-fit connection of the two workpieces provides good electrical conductivity between the two workpieces as well as high mechanical stability.

The electrical contact element preferably comprises a contact body formed from sheet metal by metal forming and at least one contact part which is arranged at least in part within the contact body and is joined with the contact body in a positive substance-fit manner by at least one weld spot, i.e. forming a material joint between the at least one contact part and the contact body.

The contact body can be formed in particular from the first workpiece of the semi-finished product. The contact body can form a cage for the contact part and, for example, assume a support function. In addition, it is possible for the contact body to be provided with a connection option for connecting an electrical line, for example, with crimping wings.

The contact part is preferably formed from the second workpiece of the semi-finished product. The contact part can be, for example, a contact pin, a flat contact, a contact spring for receiving a pin or a flat contact, or another part. The contact part can be that part of the contact element which comes into indirect contact with a mating contact element to establish an electrical connection.

As an alternative to the configuration mentioned above, the contact body can also be formed from the second workpiece and, correspondingly, the contact part can be formed from the first workpiece. The respective association depends on the geometry of the parts.

The method according to the invention can be further improved in that the window is created in the first workpiece and/or in the first and in the second workpiece before laser welding. The window can be created, for example, by punching or other methods.

A further method step can be that the two workpieces are placed against or into one another as pre-formed parts to form a semi-finished product and are subsequently joined with one another by producing at least one weld spot using laser welding.

The window on the front side of the first workpiece preferably has a base area and a surface normal that is perpendicular to this base surface, wherein an angle of less than 45° is formed between the laser beam during laser welding and the surface normal. In other words, the laser beam can be directed to be substantially perpendicular to the base area of the window. As a result, the two workpieces can also be welded to one another if a complicated structure of the contact element to be produced prevents flat irradiation.

The invention shall be explained hereafter in more detail by way of example using advantageous embodiments with reference to the drawings. The feature combinations illustrated in the embodiments by way of example can be supplemented by further features according to the above explanations in accordance with the properties of the devices of the invention that are demanded for a specific application.

Individual features can also be omitted in the embodiments described subject to the above explanations if the effect of this feature is irrelevant for a specific case of application. The same reference numerals in the drawings are always used for elements having the same function and/or the same structure,
wherein
- Fig. 1: shows a schematic representation of an electrical contact element by way of example;
- Fig. 2: shows a detail of an exemplary semi-finished product for producing an electrical contact element;
- Fig. 3: shows a detail of a semi-finished product in the region of the window;
- Fig. 4: shows a top view onto the window of Figure 3;
- Fig. 5: shows the window from Figure 3 with welded points introduced;
- Fig. 6: shows a second embodiment of a window;
- Fig. 7: shows a third embodiment of a window;
- Fig. 8: shows a top view onto the window of Figure 7;
- Fig. 9: shows a third embodiment of a semi-finished product; and
- Fig. 10: shows a cross section through a second embodiment of a semi-finished product.

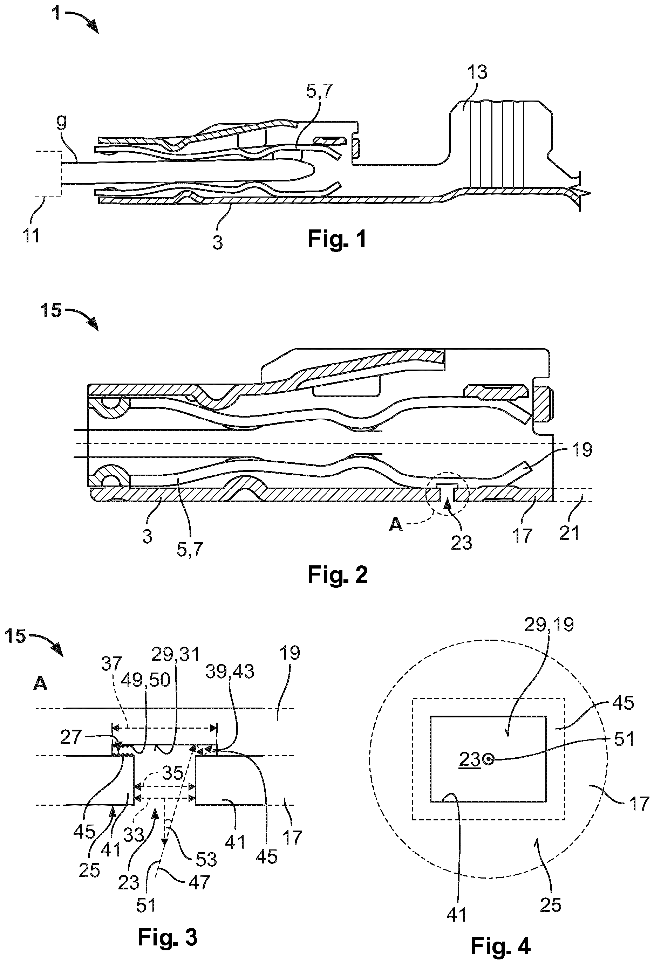

Figure 1 shows an electrical contact element 1 merely by way of example in a longitudinal sectional view and schematically. The electrical contact element is composed of two parts, a contact body 3 and a contact part 5 arranged within contact body 3. Contact part 5 is shown only by way example as a spring 7 which can serve to receive a contact part 9 of a mating contact element 11 configured to be complementary (in Figure 1 indicated by dashed lines) to establish an electrically conductive connection thereto. As an alternative to this, electrical contact element 1 can comprise a pin, a flat contact, or any other suitable structure instead of a spring 7.

Contact body 3 comprises crimping wings 13 for connecting contact element 1 to an electrical line. Contact body 3 consequently serves not only to receive contact part 5, but also to provide the electrical connection between a line received in crimping wings 13 and contact part 5.

In order to produce a sufficiently good electrical connection between contact part 5 and contact body 3, which is additionally permanent and not at risk of corrosion, the two parts are joined with one another by at least one weld spot. This shall be discussed in detail below.

Figure 2 shows a detail of a semi-finished product 15 in a longitudinal sectional view. Semi-finished product 15 shown in Figure 2 can be used to produce an electrical contact element 1 which is structured similarly to contact element 1 described with reference to Figure 1.

Semi-finished product 15 comprises a first metallic workpiece 17 and a second metallic workpiece 19. First metallic workpiece 17 is shown only by way of example such that it can form a contact body 3 for later contact element 1. Second workpiece 19 is also shown only by way of example such that it can form a contact part 5 in the form of a spring 7.

Semi-finished product 15 is characterized in that it has not yet been completely manufactured to form contact element 1. Two workpieces 17 and 19 are already placed one inside the other in the state shown in Figure 2, but are not yet joined with one another by at least one weld spot.

As an alternative to the shape of semi-finished product 15 shown in Figure 2, in which parts 17 and 19 are already largely pre-formed, it is also conceivable that one of the two workpieces, in particular first workpiece 17, is a piece of sheet metal 21 (indicated in Figure 2 by dashed lines) which has not yet been formed to become contact body 3 in the sense of the example described above. For example, a pre-formed part, in particular contact part 5, can be joined as a second workpiece 19 with piece of sheet metal 21 that has not yet been joined by a welded connection. First workpiece 17 or piece of sheet metal 21 can then be made to assume the required shape, for example, a contact body 3, by metal forming.

In order to join two workpieces 17 and 19 by way of a welded connection, a window 23 is provided which extends through first workpiece 17 in the direction of second workpiece 19 and possibly into second workpiece 19.

An enlarged representation of the region marked A from Figure 2 is shown in Figure 3. Window 23 is described hereafter with reference to Figures 2 and 3.

First workpiece 17 has a front side 25 and a rear side 27 disposed opposite front side 25. In the semifinished product 15, rear side 27 of first workpiece 17 is arranged closer to second workpiece 19. Rear side 27 is particularly preferably in contact with second workpiece 19, at least in a region surrounding window 23.

In the context of this description, the term "window" 23 refers to the entire cavity which, starting from front side 25 of first workpiece 17, extends into semi-finished product 15.

The window extends end-to-end through first workpiece 17. In the example shown in Figure 3, window 23 extends into second workpiece 19 as well. A surface 29 of second workpiece 19 is exposed to the outside through window 23. Surface 29 is accessible from the outside through window 23. Surface 29 is preferably accessible from the outside solely through window 23. Surface 29 represents a reflection surface 31 for laser light.

Window 23 has a base area 33. Base area 33 increases toward second workpiece 19. In other words, an inner dimension 35 of window 23 on front side 25 is greater than an inner dimension 37 at a point spaced from front side 25.

Window 23 has the greater inner dimension 37 in second workpiece 19. In the embodiment shown by way of example, the enlargement of base area 33 occurs abruptly so that an undercut 39 is formed in second workpiece 19.

In other words, a gap 43 extends between a boundary 41 surrounding window 23 on front side 25 and surface 29 accessible through window 23. Gap 43 can also be referred to as a niche or recess.

Gap 43 can serve as a light trap 45 for trapping laser light. Light trap 45 provides a cavity in which laser light can be reflected from surface 29 onto rear side 27 of first workpiece 17. In particular, the laser light can be reflected multiple times between surface 29 and rear side 27. The laser light is absorbed, the materials of both workpieces 17 and 19 are melted and joined with one another. This can create a weld spot.

A laser beam 47 is shown in dashed lines in Figure 3 to illustrate the method according to the invention. It is reflected at surface 29 serving as a reflection surface 31 onto rear side 27 of first workpiece 17 and is reflected back again therefrom onto surface 29. Further reflections between both surfaces can follow.

A large part of the energy radiated in is absorbed by these multiple reflections. As a result, the materials of both workpieces 17 and 19 heat up and a weld connection is created.

The laser beam can be directed onto different positions of surface 29 in succession or continuously. It is also possible for several laser beams to be directed onto different positions of surface 29 at the same time. For the sake of clarity, however, only one laser beam 47 is shown in Figure 3.

In order to increase the absorption of laser light 47 in the surfaces defining light trap 45, surface 29 and/or rear side 27 can be structured, at least in the region of light trap 45.

A microstructure 49 is indicated in Figure 3. Microstructure 49 can, for example, increase the roughness of the surface of at least one of workpieces 17 and 19 and thereby improve the absorption of the laser light. Microstructure 49 represents one form of a surface structure 50.

Laser beam 47 preferably extends perpendicular to gap 43 spanned by light trap 45. In other words, laser beam 47 preferably extends substantially parallel to a surface normal 51 of base area 33. In this sense, substantially parallel is to mean at an angle 53 of less than 45°.

Figure 4 shows a top view onto a region of window 23 viewed along surface normal 51.

Window 23 can have an overall rectangular cross-section. As an alternative thereto, other cross sections, for example, polygonal, circular, ellipsoidal, triangular, slit-shaped, or other cross sections are also possible.

When viewed along surface normal 51, light trap 45 extends behind the material of first workpiece 17. This is indicated by the dotted line in Figure 4.

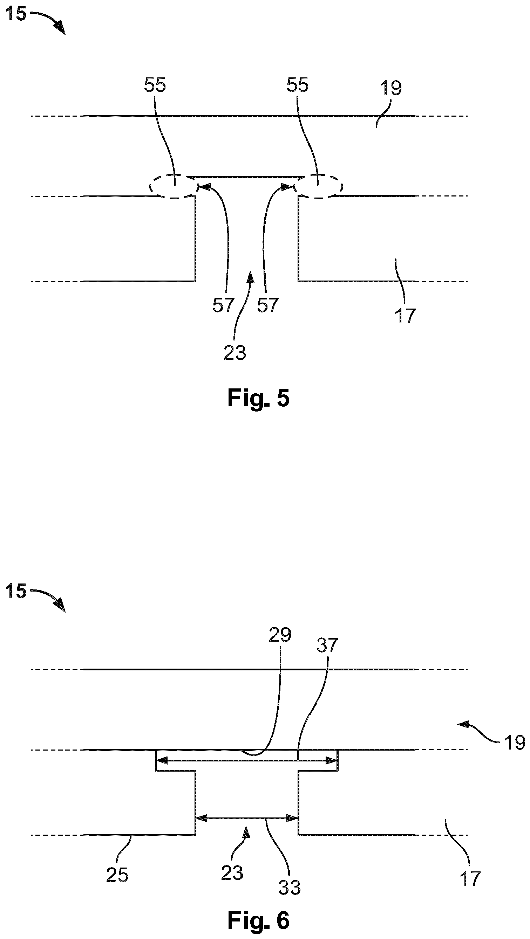

Figure 5 shows the window from Figures 3 and 4 after laser welding.

There is now at least one weld spot 55 disposed in the region in which light trap 45 was previously located. Two weld spots 55 are indicated in Figure 5. One or more punctiform weld spots 55 can be formed. It is also possible for end-to-end weld spots 55 to be formed which extend entirely or in part along original light trap 45 around window 23.

Weld spots 55 are caused by the materials of two workpieces 17 and 19 melting and subsequent cooling down. Weld spots 55 form a permanent electrically conductive and mechanical connection between the two workpieces 17 and 19. Weld spots 55 are disposed at an edge of window 57.

Figure 6 shows a second embodiment of a window 23 according to the invention in a part of a semi-finished product 15. Only the differences from the embodiment described above with reference to Figures 3 to 5 shall be discussed hereafter.

When viewed in a direction transverse to surface normal 51, window 23 has a cross section similar to window 23 described in the preceding embodiment. However, window 23 is disposed only in first workpiece 17 and exposes surface 29 of second workpiece 19. In other words, window 23 is formed as a two-stage bore in first workpiece 17 in which a first stage with a smaller diameter, which corresponds to inner dimension 35, extends from front side 25 into workpiece 17, and a second stage, starting out from the first stage through rear side 27, wherein the second stage has a larger diameter corresponding to inner dimension 37. In this embodiment, the formation of a recess in second workpiece 19 can be dispensed with.

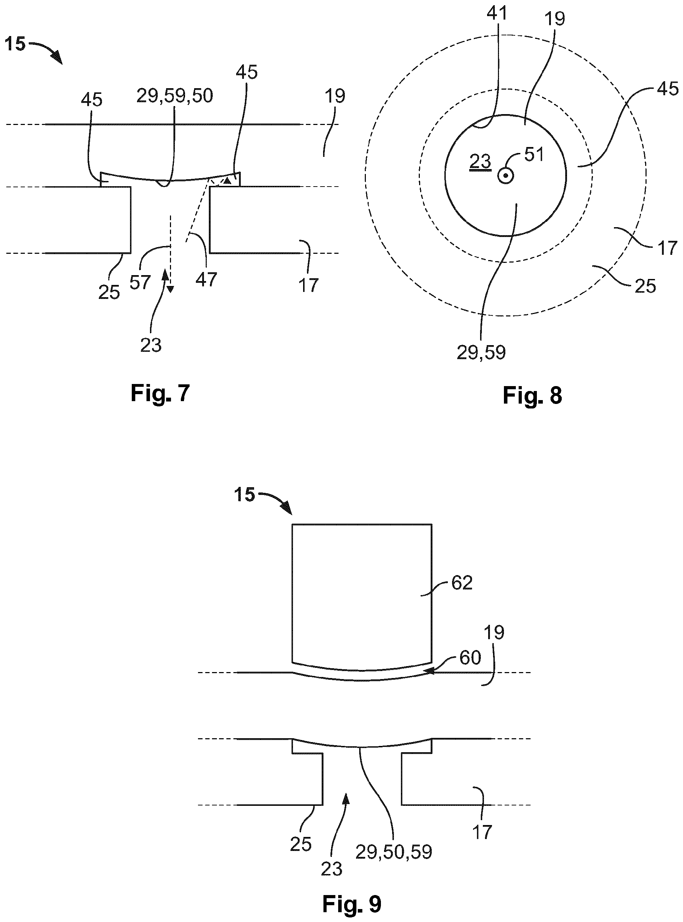

A further advantageous embodiment of a window 23 for a semi-finished product 15 is described hereafter with reference to Figures 7 and 8. Here as well, only the differences from the embodiment described with reference to Figures 3 to 5 have been discussed for the sake of brevity.

Window 23 extends substantially similarly to the first embodiment through first workpiece 17 into second workpiece 19. The difference from the first embodiment is that second workpiece 19 is provided with a structured surface 29 in the form of a convex curvature 59. Convex curvature 59 represents a further form of a surface structure 50. Convex curvature 50 can be combined with a microstructure 49, as is described with reference to Figure 3.

Convex curvature 59 projects towards front side 25 of first workpiece 17. Convex curvature 29 can facilitate directing a laser beam 47 into light trap 45. A laser beam 47 with multiple reflections is indicated in Figure 7 by dashed lines.

A further embodiment of a semi-finished product 15 is illustrated in Figure 9. Window 23 is similar to the embodiment described with reference to Figure 7. This means that window 23 exposes surface 29 of second workpiece 19 which is provided with a surface structure 50 in the form of a convex curvature 59.

In contrast to the embodiment described with reference to Figure 7, in which second workpiece 19 is provided with surface structure 50 and with light trap 45 and the enlarged inner dimension 37, workpiece 17 in the embodiment of Figure 9 is provided with increased inner dimension 37.

Convex curvature 59 of surface 29 can be achieved in that the material of second workpiece 19 is bent or embossed towards first workpiece 17 at least in the region of window 23. In other words, second workpiece 19 has an embossing 60 by which convex curvature 59 is formed. Such an embossing 60 can be produced, for example, by a punch 62 which is shown schematically in Figure 9. Embossing 60 can take place before or after workpieces 17 and 19 have been positioned relative to one another.

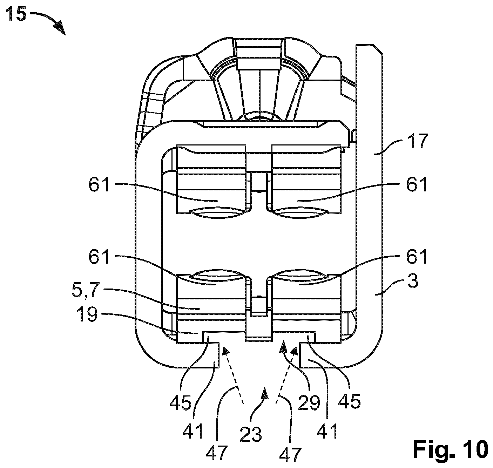

A further embodiment of a semi-finished product 15 is illustrated123 in Figure 10 in a cross section.

Semi-finished product 15 comprises a first workpiece 17 which forms a contact body 3 and a second workpiece 19 which forms a contact part 5 shaped as a spring 7. Spring 7 has several slats 61.

Contact part 5 can be used for the connection to a flat contact which is contacted by slats 61 when the flat contact is used in later contact element 1. A window 23 extends through first workpiece 17 and exposes surface 29 of two adjacent slats 61 of spring 7.

A light trap 45 is formed between each slat 61 and boundary 41 of window 22. Two laser beams 47 can be fired through the window into light traps 45 at the same time in order to weld both slats 61 to first workpiece 17 at the same time.

As an alternative to this, laser beams 47 can also be fired through window 47 successively.

In order to simultaneously generate two laser beams 47 for laser welding, a single laser beam can be emitted through a bifocal lens and thus split.

### REFERENCE SIGNS

- 1: electrical contact element
- 3: contact body
- 5: contact part
- 7: spring
- 9: contact part
- 11: contact element
- 13: crimping wing
- 15: semi-finished product
- 17: first workpiece
- 19: second workpiece
- 21: piece of sheet metal
- 23: window
- 25: front side
- 27: rear side
- 29: surface
- 31: reflection surface
- 33: base area
- 35: inner dimension
- 37: inner dimension
- 39: undercut
- 41: boundary
- 43: gap
- 45: light trap
- 47: laser beam
- 49: Microstructure
- 50: surface structure
- 51: surface normal
- 53: angle
- 55: weld spot
- 57: edge
- 59: convex curvature
- 60: embossing
- 61: slat
- 62: punch

## Claims

1. Semi-finished product (15) for manufacturing an electrical contact element (1), wherein said semi-finished product (15) comprises a first metallic workpiece (7) and a second metallic workpiece (19), wherein said first workpiece (17) has a front side (25) and a rear side (27) disposed opposite said front side (25), and said rear side (27) is arranged closer to said second workpiece (19), wherein said semi-finished product (15) comprises at least one window (23) which extends at least through said first workpiece and through which a surface (29) of said second workpiece (19) is accessible from said first workpiece (17), and wherein said window (23) has a base area (33) which, starting out at said front side (25) of said first workpiece (17), increases towards said second workpiece (19).

2. Semi-finished product (15) according to claim 1, wherein at least one light trap (45) for capturing laser light (47) extends between a boundary (41) surrounding said window (23) on said front side (25) of said first workpiece (17) and said surface (29) of said second workpiece (19) that is accessible through said window (23).

3. Semi-finished product (15) according to claim 2, wherein said at least one light trap (45) forms a gap (43) between said two workpieces (17, 19).

4. Semi-finished product (15) according to one of the claims 1 to 3, wherein one of said workpieces (17, 19) is a piece of sheet metal (21) and said other workpiece (17, 19) is a contact part (5) for said contact element (1).

5. Semi-finished product (15) according to one of the claims 1 to 4, wherein at least said surface (29) of said second workpiece (19) that is accessible through said window (23) is provided with a surface structure (50).

6. Semi-finished product (15) according to claim 5, wherein said surface (29) that is accessible through said window (23) is provided with at least one convex curvature (59).

7. Semi-finished product (15) according to claim 5 or 6, wherein at least said surface (29) of said second workpiece (19) that is accessible through said window (23) is provided with a microstructure (49).

8. Semi-finished product (15) according to one of the claims 5 to 7, wherein a surface (29) of said first workpiece (17) defining said light trap (45) is provided with a microstructure (49).

9. Electrical contact element (1) which is manufactured from a semi-finished product (15) according to one of the claims 1 to 8.

10. Electrical contact element (1) according to claim 9, wherein said two workpieces (17, 19) are joined with one another in a positive substance-fit manner at an edge (57) of said window (23) by at least one weld spot (55).

11. Electrical contact element (1) according to claim 9 or 10, comprising a contact body (3) formed from a piece of sheet metal (21) by metal forming and at least one contact part (5) which is arranged at least in part within said contact body (3) and is joined with said contact body (3) in a positive substance-fit manner by at least one weld spot (55).

12. Method for joining a first metallic workpiece (17) with a second metallic workpiece (19) by way of laser welding, wherein at least said first workpiece (17) has a front side (25) and a rear side (27) disposed opposite said front side (25), and said rear side (27) is arranged closer to said second workpiece (19) than said front side (25), and wherein at least one laser beam (47) is directed through a window (23) which extends at least through said first workpiece (17) onto said second workpiece (19) and is reflected from said second workpiece (19) onto said rear side (27) of said first workpiece (17).

13. Method according to claim 12, wherein one of said workpieces (17, 19) is a piece of sheet metal (21) and said other workpiece (17, 19) is a pre-formed contact part (5) for an electrical contact element (1), wherein said pre-formed contact part (5) is joined with said piece of sheet metal (21) at at least one weld spot (55) by way of laser welding and said piece of sheet metal (21) is shaped around said pre-formed contact part (5).

14. Method according to claim 12 or 13, wherein both workpieces (17, 19) are pre-formed parts (3, 5) and both parts (3, 5) are placed against or into one another to form a semi-finished product (15) and are subsequently joined with one another by producing at least one weld spot (55) by way of laser welding.

15. Method according to one of the claims 12 to 14, wherein said window (23) on said front side (25) of said first workpiece (17) has a base area (33) and a surface normal (51) that is perpendicular to said base area (33), and wherein an angle (53) of less than 45° is formed between said laser beam (47) and said surface normal (51).
